(19) Europäisches Patentamt
European Patent Office
Office européen des brevets

(11) **EP 2 073 544 A1**

(12) **DEMANDE DE BREVET EUROPEEN**

(43) Date de publication:
**24.06.2009 Bulletin 2009/26**

(51) Int Cl.:
***H04N 7/167*** *(2006.01)*

(21) Numéro de dépôt: **07301724.6**

(22) Date de dépôt: **20.12.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK RS**

(71) Demandeur: **GEMPLUS**
**13420 Gémenos (FR)**

(72) Inventeur: **Rhelimi, Alain**
**13600 Ceyreste (FR)**

(54) **Système, objet portable et terminal pour déchiffrer des données audio et/ou vidéo chiffrées**

(57)      L'invention concerne un système 10 pour déchiffrer des données audio et/ou vidéo chiffrées. Le système comprend un terminal 13 et au moins un objet 14 portable. Le terminal et/ou l'objet portable comprennent des moyens pour recevoir des données audio et/ou vidéo chiffrées depuis l'extérieur du système, des moyens pour déterminer au moins une clef de déchiffrement, et des moyens pour déchiffrer les données audio et/ou vidéo chiffrées. Ladite au moins une clef de déchiffrement est nécessaire pour déchiffrer les données audio et/ou vidéo chiffrées.

Selon l'invention, le terminal et au moins un objet portable comprennent, chacun, au moins une interface de communication de type sans contact, pour échanger des données relatives à au moins une clef de déchiffrement, des données audio et/ou vidéo chiffrées et/ou des données audio et/ou vidéo déchiffrées.

L'invention concerne également un objet portable et un terminal correspondants.

Fig. 1

## Description

### Domaine technique de l'invention :

L'invention concerne, d'une façon générale, un système pour déchiffrer des données audio et/ou vidéo chiffrées.

Pour ce faire, le système comprend un terminal et un ou plusieurs objets portables destinés à coopérer avec le terminal. En outre, le terminal et/ou l'objet ou les objets portables comprennent des moyens pour recevoir, depuis l'extérieur, des données audio et/ou vidéo chiffrées, des moyens pour déterminer au moins une clef de déchiffrement, et des moyens pour déchiffrer les données audio et/ou vidéo chiffrées. La ou les clefs de déchiffrement sont nécessaires pour déchiffrer les données audio et/ou vidéo chiffrées.

De plus, l'invention porte également sur un tel objet portable.

Enfin, l'invention est aussi relative à un tel terminal.

### Etat de la technique :

Parmi des standards de transmission connus pour apporter un service de télédiffusion de données à un équipement mobile ou fixe, on peut notamment citer :

- le DVB-H (acronyme pour « Digital Video Broadcasting- Handheld » en langue anglaise) ;
- le DAB (acronyme pour « Digital Audio Broadcasting » en langue anglaise) ;
- le DMB (acronyme pour « Digital Multimedia Broadcasting » en langue anglaise) ;
- l'ISDB-T (acronyme pour « Integrated Services Digital Broadcasting-Terrestrial» en langue anglaise) ; et
- le MBMS (acronyme pour « Mobile Broadcast Multicast Service » en langue anglaise).

Pour le standard de transmission DVB-H, il est connu, par exemple, d'utiliser, pour une application de télédiffusion mobile, un téléphone mobile connecté, au travers d'un réseau de radiotéléphonie, à un serveur fournisseur de contenu chiffré.

Le serveur diffuse, au travers du réseau de radiotéléphonie, des données chiffrées. Les données chiffrées incluent notamment des données audio et vidéo chiffrées.

Pour déchiffrer les données audio et vidéo chiffrées, le téléphone mobile est équipé, en particulier, d'une interface de communication au réseau de radiotéléphonie, d'une interface de communication à contact avec une carte à puce, d'un écran, et d'un haut parleur.

Le téléphone mobile est prévu pour recevoir, au travers de l'interface de communication au réseau de radiotéléphonie, depuis le serveur, les données chiffrées diffusées.

Le téléphone mobile déchiffre les données audio et vidéo chiffrées, afin d'obtenir un flux de données audio et vidéo en clair.

Pour déchiffrer les données chiffrées, le téléphone mobile coopère avec une carte à puce de type « SIM » (acronyme pour « Subscriber Identity Module » en langue anglaise), dite carte SIM. La carte SIM est dotée, outre une application d'authentification de son porteur permettant notamment de se connecter au réseau de radiotéléphonie d'un opérateur, d'une application de déchiffrement relative à une ou plusieurs clefs de déchiffrement.

En outre, le téléphone mobile est adapté pour déchiffrer les données audio et vidéo chiffrées à l'aide de données relatives à l'une ou à plusieurs clefs de déchiffrement échangées avec la carte SIM au travers de l'interface de communication à contact de type ISO 7816 (acronyme pour « International Standards Organization » en langue anglaise).

Une fois les données audio et vidéo déchiffrées, le téléphone mobile transmet, de manière continue, les données vidéo à l'écran pour leur affichage, et les données audio au haut-parleur pour leur diffusion.

Cependant, une telle solution connue présente certains inconvénients majeurs.

Tout d'abord, une telle solution basée sur l'utilisation d'un téléphone mobile nécessite de passer un contrat entre un utilisateur de la carte SIM et un opérateur de radiotéléphonie ou MNO (acronyme pour « Mobile Network Operator » en langue anglaise), pour bénéficier de l'application de télédiffusion depuis un serveur fournisseur de contenu chiffré.

En outre, une telle solution est peu souple d'utilisation pour accéder au serveur au travers du réseau de radiotéléphonie. En effet, par exemple, si l'utilisateur est amené à changer d'operateur de radiotéléphonie, il doit passer un nouveau contrat auprès du fournisseur de contenu chiffré gérant directement ou indirectement le serveur. Un tel changement d'opérateur de radiotéléphonie nécessite de trouver un nouvel operateur de radiotéléphonie qui donne accès, au travers de son propre réseau, au serveur. Ainsi, il est nécessaire que le serveur soit accessible, au travers de plusieurs réseaux de radiotéléphonie, impliquant plusieurs opérateurs de radiotéléphonie.

Toutefois, le changement d'opérateur de radiotéléphonie implique également un changement de carte SIM. Le changement de carte SIM requiert l'intervention de l'utilisateur final. L'utilisateur final est alors contraint d'extraire l'actuelle carte SIM amovible présente au sein du téléphone mobile hôte pour y insérer une autre carte SIM dépendante du nouvel opérateur de radiotéléphonie.

Or, de telles opérations d'extraction et d'insertion de cartes SIM nécessitent un démontage puis un remontage du téléphone mobile hôte longs, fastidieux voire rédhibitoires, pour accéder au serveur. Par conséquent, l'utilisateur final est fortement dépendant de l'opérateur de radiotéléphonie lui permettant l'accès au serveur. Une telle forte dépendance ne favorise pas le changement d'opérateur de radiotéléphonie, et n'encourage donc pas à la mobilité de l'utilisateur final entre différents opérateurs de radiotéléphonie.

Enfin, une telle solution souffre d'un manque d'interopérabilité au travers de différents types de réseaux de télécommunication pour accéder au serveur. En d'autres termes, une telle solution n'est pas compatible avec un réseau de télécommunication autre que le réseau de radiotéléphonie, pour accéder au serveur. En effet, l'utilisation de la seule carte SIM comme explicitée précédemment ne facilite pas le déchiffrement de contenu chiffré fourni au travers d'un réseau de télécommunication autre que le réseau de radiotéléphonie. Ainsi, l'utilisateur final ne peut pas bénéficier d'une application de télédiffusion mobile, au travers d'un réseau filaire, en utilisant la seule carte SIM, par exemple en coopération avec un ordinateur personnel (ou PC acronyme pour « Personal Computer » en langue anglaise), en tant que terminal, relié à un réseau filaire Internet, ou avec un décodeur (ou « set-up box » en langue anglaise), en tant que terminal.

**Exposé de invention :**

L'invention s'affranchit des inconvénients majeurs précédemment énoncés en fournissant un système pour déchiffrer des données audio et/ou vidéo chiffrées.

Plus particulièrement, l'invention est un système pour déchiffrer des données audio et/ou vidéo chiffrées. Le système comprend un terminal et au moins un objet portable. Le terminal et/ou l'objet portable comprennent des moyens pour recevoir des données audio et/ou vidéo chiffrées depuis l'extérieur du système, des moyens pour déterminer au moins une clef de déchiffrement, et des moyens pour déchiffrer les données audio et/ou vidéo chiffrées. Ladite au moins une clef de déchiffrement est nécessaire pour déchiffrer les données audio et/ou vidéo chiffrées.

Selon l'invention, le terminal et au moins un objet portable comprennent, chacun, au moins une interface de communication de type sans contact, pour échanger des données relatives à au moins une clef de déchiffrement, des données audio et/ou vidéo chiffrées, et/ou des données audio et/ou vidéo déchiffrées.

Le principe général de l'invention repose donc sur une nouvelle approche où l'architecture utilisée pour la communication entre un terminal et un (ou plusieurs) objet portable est, non pas une interface de type à contact telle que celle utilisée par la solution de l'art antérieur explicitée supra, mais une ou plusieurs interfaces de type sans contact.

Il faut entendre par l'expression « interface de communication de type sans contact », encore désignée ci-après par l'expression « interface sans contact », une interface de communication prévue au sein d'une entité, en tant qu'expéditeur ou destinataire de données, ne nécessitant pas de venir en contact ou toucher physiquement une interface correspondante prévue au sein d'une autre entité, en tant que destinataire ou expéditeur de données, pour pouvoir communiquer.

Au travers de l'interface ou des interfaces sans contact, le terminal et au moins certains objets portables impliqués échangent, pour déchiffrer les données audio et/ou vidéo chiffrées, des données sans nécessiter un rapprochement physique allant jusqu'au contact tel que celui nécessaire pour la solution connue.

Il convient de noter que l'invention n'impose aucune contrainte quant au sens de l'échange de données entre le terminal et l'objet portable.

En outre, soit le terminal soit l'objet portable, en tant qu'une entité du système, détermine tout ou partie des clefs de déchiffrement, et transmet des données relatives à une ou plusieurs clefs de chiffrement, à l'autre entité du système, soit l'objet portable soit le terminal respectivement, afin que l'autre entité déchiffre les données audio et/ou vidéo chiffrées à l'aide de la ou des clefs de déchiffrement reçues.

De plus, l'entité du système ayant déchiffré les données audio et/ou vidéo, peut transmettre, à l'autre entité du système, les données audio et/ou vidéo telles que déchiffrées. L'autre entité du système peut être apte à afficher, sur au moins un écran, les données vidéo déchiffrées reçues, et/ou à diffuser, au travers d'au moins un haut-parleur, les données audio déchiffrées reçues.

Le terminal nécessite seulement une simple ou de simples interfaces de communication de proximité à un réseau personnel reliant le terminal à l'objet portable ou chaque objet portable.

Par ailleurs, la communication du terminal à un même objet portable peut avoir lieu, dans un sens de communication, au travers d'une première interface sans contact, et dans un autre sens de communication, au travers d'une deuxième interface sans contact. Un tel choix de l'interface sans contact à utiliser peut être effectué pour de multiples raisons, par exemple des raisons de débit maximum inhérent aux interfaces sans contact disponibles et/ou pour des raisons de sécurisation de la communication proprement dite.

Contrairement à la solution connue et rappelée plus haut, l'invention n'impose aucune contrainte sur la façon de fournir au système des données audio et/ou vidéo chiffrées à déchiffrer. Il peut notamment s'agir d'un serveur transmettant, de manière indépendante d'un réseau de radiotéléphonie, des données audio et/ou vidéo chiffrées à déchiffrer, par exemple au travers d'un réseau de type filaire ou sans fil Internet ou Intranet. Ainsi, il n'est pas besoin de s'authentifier ni sur un réseau de radiotéléphonie, ni sur un réseau de communication de quelqu'autre nature que ce soit, par lequel l'utilisateur final du système reçoit, via le système, les données audio et/ou vidéo chiffrées.

Il résulte de l'utilisation, non pas d'une interface à contact, mais d'une interface sans contact permet de ne pas être uniquement lié à un unique opérateur de réseau filaire ou non filaire.

En effet, l'objet portable n'est plus aussi étroitement lié au terminal que dans la solution décrite plus haut. Ainsi, le contexte architecturel utilisé permet d'accéder à un serveur sans forcément exploiter un seul réseau filaire ou non filaire.

De cette manière, la possibilité d'accès à un contenu par exemple de type multimédia est augmentée, facilitant grandement son déploiement et son administration.

En d'autres termes, la seule contrainte imposée au système est de pouvoir recevoir, au travers d'un réseau de télécommunication, des données audio et/ou vidéo chiffrées depuis le serveur. Ainsi, l'utilisateur final a le choix du réseau de télécommunication parmi l'ensemble de ceux qui sont reliés, au travers du système, au serveur.

Par ailleurs, l'architecture utilisée peut faire intervenir un terminal et plusieurs objets portables, au travers du réseau personnel, mis en oeuvre pour communiquer.

Enfin, du fait de l'interface sans contact, il n'est pas nécessaire de manipuler mécaniquement le système pour appairer-désappairer un objet portable au terminal, et inversement. En effet, aucun désassemblage ou assemblage du terminal impliqué pour accéder à l'objet portable n'est nécessaire avant d'appairer ce dernier au même terminal (ou, éventuellement, à un autre terminal), pour continuer à suivre un flux de données traitées et déchiffrées au sein du système.

Selon un autre aspect, l'invention est un objet portable pour déchiffrer des données audio et/ou vidéo chiffrées. L'objet portable comprend des moyens pour déterminer au moins une clef de déchiffrement. Ladite au moins une clef de déchiffrement est nécessaire pour déchiffrer les données audio et/ou vidéo chiffrées.

Selon l'invention, l'objet portable comprend au moins une interface de communication de type sans contact, pour échanger, avec l'extérieur de l'objet portable, des données relatives à au moins une clef de déchiffrement, des données audio et/ou vidéo chiffrées, et/ou des données audio et/ou vidéo déchiffrées.

On comprend que l'utilisation d'une ou plusieurs interfaces sans contact confère une liberté de mouvement certaine au porteur de l'objet portable tout en restant connecté, vis-à-vis d'un terminal ou d'un autre objet portable à appairer, ou appairé, ou à désappairer, à l'aide d'une interface à contact. De cette manière, une continuité de service, à savoir de traitement du flux de données audio et/ou vidéo chiffrées, est facilement assurée.

Ainsi, contrairement à la solution connue et rappelée plus haut, le fait d'utiliser une technologie d'interfaçage sans contact augmente la souplesse d'utilisation de l'objet portable en question.

Un tel objet portable étant libre de tout opérateur de télécommunication lui permet d'être compatible avec tout réseau de télécommunication relié au serveur fournisseur de données audio et/ou vidéo chiffrées. En d'autres termes, un tel objet portable est indépendante de tout opérateur de réseau de radiotéléphonie.

En tant qu'objet portable, il peut revêtir différentes formes. Il peut consister, par exemple, en un « dongle » (ne nécessitant d'aucun lecteur spécifique pour accéder à toute application qu'il supporte), une oreillette, ou un porte-clef muni d'une ou de plusieurs interfaces sans contact de proximité (de type radiofréquence, par exemple de type Bluetooth, Wibree, Wifi, Zigbee, NFC (acronyme pour « Near Field Communication » en langue anglaise), ou infra rouge) et/ou de type sans fil USB (ou wireless USB (acronyme pour « Universal Serial Bus » en langue anglaise)).

Selon un autre aspect, l'invention est un terminal pour déchiffrer des données audio et/ou vidéo chiffrées. Le terminal comprend des moyens pour recevoir, depuis l'extérieur du terminal, des données audio et/ou vidéo chiffrées, au moins une clef de déchiffrement étant nécessaire pour déchiffrer les données audio et/ou vidéo chiffrées.

Selon l'invention, le terminal comprend au moins une interface de communication de type sans contact, pour échanger, avec l'extérieur du terminal, des données relatives à au moins une clef de déchiffrement, des données audio et/ou vidéo chiffrées, et/ou des données audio et/ou vidéo déchiffrées..

On comprend que l'utilisation d'une ou plusieurs interfaces sans contact au sein du terminal confère une augmentation du nombre d'interlocuteurs potentiels simultanément ou de manière décalée dans le temps.

En outre, l'utilisation d'une ou plusieurs interfaces sans contact au sein du terminal facilite la délégation d'une ou plusieurs fonctions précédemment dévolues au terminal, à d'autres entités externes au terminal, tel qu'un ou des objets portables, vis-à-vis d'un objet portable à appairer ou à désappairer, par rapport à un terminal connu communiquant à travers une interface à contact.

**Description des dessins :**

D'autres caractéristiques et avantages de l'invention apparaîtront à la lecture de la description d'un unique mode de réalisation préférentiel de l'invention, donné à titre de simple exemple indicatif non limitatif et des dessins annexés, dans lesquels :

- la figure 1 présente un schéma simplifié d'un exemple dans lequel est mis en oeuvre un système, selon l'invention, relié à un serveur fournisseur de contenu chiffré ;
- la figure 2 illustre un schéma simplifié du système de la figure 1 dans lequel un terminal interagit, au travers d'une interface de type sans contact, avec un objet portable, pour déchiffrer les données audio et vidéo chiffrées ; et
- la figure 3 représente un schéma détaillé de l'objet portable du système de la figure 2.

## Description d'un unique mode de réalisation :

Le mode de réalisation explicité en relation avec les figures annexées n'a pas pour objet de réduire la portée de l'invention, il peut donc y être apporté de nombreuses modifications sans sortir pour autant du cadre de celle-ci.

Le mode de réalisation de l'invention décrit ci-dessous est relatif à une application de télédiffusion de données chiffrées audio et vidéo relatives à une télévision.

Bien entendu, l'invention peut également s'appliquer à une application de télédiffusion de données chiffrées purement audio ou purement vidéo.

L'invention vise, en particulier, à faire profiter un utilisateur final d'un contenu multimédia par d'autres voies que celle connue utilisant uniquement un seul et même réseau de télécommunication non filaire constitué d'un réseau de radiotéléphonie.

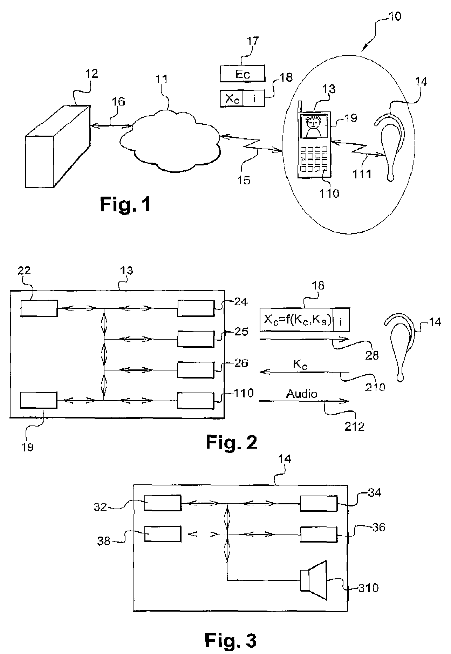

Comme présenté à titre d'exemple sur la figure 1, un système 10 électronique est relié à distance, au travers d'un réseau 11 de télécommunication, à un serveur 12 distant de télédiffusion, en tant que fournisseur de données audio et vidéo chiffrées.

Il convient de noter que le réseau 11 de télécommunication est indépendant de tout réseau de radiotéléphonie.

Un utilisateur final du système 10 désire accéder à un contenu audio et vidéo, non chiffré ou en clair, fourni, de manière chiffrée, par le serveur 12.

Le serveur 12 peut être accessible au travers de différents types de réseaux de télécommunication (non représentés), et de plus, pour un même type de réseau de télécommunication, au travers de différents réseaux de télécommunication (non représentés).

Le serveur 12 diffuse des données Ec audio et vidéo chiffrées véhiculées par des messages 17 de contenu.

Les données Ec audio et vidéo chiffrées peuvent être relatives par exemple à un service de programmes de télévision en direct ou en différé ou à un service de programmes de vidéos à la demande.

En outre, le serveur 12 diffuse des données Xc relatives à, d'une part, une clef de déchiffrement dite de contenu Kc, et d'autre part, une clef de déchiffrement dite de service Ks véhiculées par des messages 18 de service.

Les données Xc relatives aux clefs de déchiffrement de contenu Kc et de service Ks correspondent au chiffré de la clef de déchiffrement de contenu Kc au moyen de l'unique clef de déchiffrement de service Ks non diffusée.

On rappelle qu'une clef de déchiffrement correspond à la clef de chiffrement lorsqu'un algorithme de chiffrement utilisé est de type symétrique, tel que le DES (acronyme de « Data Encryption Standard » en langue anglaise).

Par souci de simplification de description, toute clef de déchiffrement correspond à une clef de chiffrement.

Bien entendu, d'autres algorithmes de chiffrement, tel qu'un algorithme de chiffrement de type asymétrique, peuvent également être utilisés sans sortir du cadre de l'invention.

De plus, le serveur 12 diffuse également des données chiffrées relatives à un indice i de la clef de déchiffrement de service Ksi à utiliser et véhiculées par des messages 18 de service. Les données relatives à l'indice i de la clef de déchiffrement de service Ks sont utilisées pour identifier, parmi une pluralité de clefs de chiffrement de service Ks, une unique clef de déchiffrement de service Ksi. Toutes les clefs de déchiffrement de service Ks1, Ks2, Ks3... sont stockées au sein du système 10.

L'indice i identifie la bonne clef de déchiffrement de service Ksi nécessaire pour déterminer la clef de déchiffrement de contenu Kc.

La clef de déchiffrement de contenu Kc est à utiliser pour déchiffrer les données Ec audio et vidéo chiffrées.

Pour se connecter au serveur 12, le système 10 de l'invention ne nécessite pas obligatoirement un accord préalable avec un opérateur de radiotéléphonie pour profiter d'un service de télédiffusion mobile.

Il suffit que le système 10 récupère ou comporte des données permettant de déterminer une ou plusieurs clefs de déchiffrement nécessaires pour déchiffrer les données audio et vidéo chiffrées.

De telles données relatives à la ou les clefs de déchiffrement à utiliser pour déchiffrer les données audio et vidéo chiffrées sont fournies, par exemple, sous la forme d'un abonnement à un service de télédiffusion depuis le serveur 12, et ce indépendamment du réseau 11 de télécommunication exploité pour se connecter au serveur 12.

De cette manière, l'utilisateur final n'a pas besoin de s'authentifier sur un réseau de radiotéléphonie pour bénéficier du service de télédiffusion.

Le système 10 de l'invention peut simplement être basé sur un accord avec un opérateur fournisseur de contenu, et ce indépendamment du réseau de télécommunication exploité, pour accéder aux données Ec audio et vidéo chiffrées délivrées par le serveur 12.

Le système 10 est prévu pour recevoir, depuis le serveur 12, et au travers du réseau 11 de télécommunication, les messages 17 de contenu et les messages 18 de service.

Le système 10 est adapté pour déterminer, à partir des messages 18 de service, la clef de déchiffrement de service Ksi à utiliser, puis, en déduire la clef de déchiffrement de contenu Kc correspondante.

Les clefs de déchiffrement de service Ksi et de contenu Kc associée à la clef de déchiffrement de service Ksi étant déterminées, le système 10 est adapté pour déchiffrer les données Ec audio et vidéo chiffrées en utilisant la clef de déchiffrement de contenu Kc.

Le système 10 inclut un terminal 13 et un objet portable 14.

On désigne, dans le présent document de brevet, par le terme « terminal », un équipement situé à l'extrémité du réseau 11 de télécommunication exploité.

Le terminal 13 comporte un écran 19 d'affichage de données et un clavier 110. Le clavier 110 est utilisé par l'utilisateur final pour sélectionner, par exemple, d'abord le serveur 12 ou un autre serveur (non représenté) accessible depuis le système 10, puis, éventuellement un programme de télédiffusion parmi ceux fournis par le serveur 12 sélectionné.

L'objet portable 14 interagit avec le terminal 13 en échangeant des messages. L'objet portable 14 est destiné à coopérer avec le terminal 13 pour déchiffrer les données chiffrées Ec audio et vidéo, à l'aide des données chiffrées Xc, i relatives aux deux clefs de déchiffrement de service Ks et de contenu Kc, et à l'indice i identifiant la clef de déchiffrement de service Ksi à utiliser.

Préférentiellement, les moyens pour déterminer la clef de déchiffrement de la clef de contenu Kc et les moyens pour mémoriser la ou les clefs de déchiffrement de service sont dissociés du terminal 13 et prévus au sein de l'objet portable 14 avec lequel le terminal 13 interagit.

Le système 10 constitue un équipement, au moins en partie, mobile. La mobilité du système 10 est notamment due à l'objet portable 14 porté par l'utilisateur final.

Une telle mobilité est rendue possible du fait que le terminal 13 et l'objet portable 14 sont adaptés pour échanger des données en utilisant, chacun, une interface de type sans contact. Ainsi, le terminal 13 et l'objet portable 14 échangent via un lien 111 radiofréquence.

L'interface sans contact utilisée de part et d'autre au sein du système 10 est de type radiofréquence.

Selon une variante de réalisation, l'interface sans contact utilisée de part et d'autre au sein du système 10 est de type infra rouge.

Selon une autre variante de réalisation, le terminal 13 et l'objet portable 14 sont équipés de plusieurs interfaces sans contact de type radiofréquence et/ou de type infra rouge, pour échanger des données.

Le système 10 est apte à déchiffrer les données audio et vidéo chiffrées au niveau du serveur 12.

Le système 10 est destiné à recevoir, depuis l'extérieur, via une liaison 15 radiofréquence au moins monodirectionnelle, à savoir depuis le réseau 11 de communication vers le système 10, les données chiffrées diffusées. Les données chiffrées comportent les données Ec audio et vidéo chiffrées et les données chiffrées Xc relatives aux deux clefs de déchiffrement de service Ks et de contenu Kc et les données relatives à l'indice i identifiant la clef de déchiffrement de service Ksi à utiliser.

Selon une variante de réalisation (non représentée), le système est relié via une liaison filaire au réseau 11 de communication.

Pour recevoir les données Ec audio et vidéo chiffrées, le système 10 comprend des moyens pour communiquer, via la liaison 15 radiofréquence, avec le réseau 11 de communication.

Le système 10 connecté au travers du réseau 11 au serveur 12, ne nécessite aucune authentification, au travers du réseau 11 de communication et d'une liaison 16 filaire au moins monodirectionnelle, à savoir depuis le serveur 12 vers le réseau 11 de communication.

Le réseau 11 de communication comprend une infrastructure d'un ou plusieurs réseaux filaire(s) et/ou non-filaire(s), chacun des réseaux étant composé de plusieurs éléments relais de communication. Le réseau 11 de communication est raccordé au serveur 12, au travers de la liaison 16 filaire. La liaison 16 filaire est, par exemple, relative à un réseau de type Internet ou Intranet.

Selon une variante de réalisation (non représentée), le réseau 11 de communication est relié, via une liaison radiofréquence, au moins monodirectionnelle, à savoir depuis le serveur 12 vers le réseau 11 de communication, au serveur 12.

Le serveur 12 est géré directement ou indirectement par l'opérateur fournisseur de contenu.

Le serveur 12 est relié, par ailleurs, à travers une liaison filaire, à une unité centrale (non représentée). L'unité centrale est apte à délivrer, ou à mettre à jour, des données à destination du serveur 12 pour que ce dernier chiffre les données ou non. L'unité centrale et le serveur 12 sont, par exemple, situés au sein d'un local géré par l'opérateur fournisseur de contenu. L'opérateur fournisseur de contenu donne accès à son serveur 12, de préférence, au travers de plusieurs réseaux de télécommunication. Le serveur 12 chiffre, lui-même, les données audio et vidéo fournies par l'unité centrale, éventuellement à l'aide de données relatives à des clefs de chiffrement de contenu et de service correspondantes fournies par l'unité centrale.

Le serveur 12 transmet au système 10, au travers de la liaison 16 filaire, du réseau 11 de communication, et de la liaison 15 radiofréquence, un flux de données Ec audio et vidéo chiffrées, et les données chiffrées Xc relatives aux deux clefs de déchiffrement de service Ksi et de contenu Kc et les données relatives à l'indice i de la clef de déchiffrement de service Ksi.

Les données Ec audio et vidéo chiffrées à l'aide des clefs de chiffrement de service Ksi et de contenu Kc sont transmises, en parallèle, des données chiffrées relatives aux clefs de déchiffrement de service Ks et de contenu Kc chiffrées et de l'indice i de la clef de déchiffrement de service à utiliser.

Le flux de données Ec audio et vidéo chiffrées est véhiculé via un premier canal de transmission dédié.

De même, les données chiffrées Xc relatives aux deux clefs de déchiffrement de service Ks et de contenu Kc et les données relatives à l'indice i de la clef de déchiffrement de service sont véhiculés via un deuxième canal de transmission dédié. Les premier et deuxième canaux de transmission dédiés sont distincts l'un de l'autre.

Selon une variante de réalisation, le flux de données Ec audio et vidéo chiffrées et les données chiffrées Xc relatives aux deux clefs de déchiffrement de service Ks et de contenu Kc et les données relatives à l'indice i de la clef de déchiffrement de service sont véhiculées via un seul et même canal de transmission.

De manière optionnelle, le serveur 12 est apte à embrouiller les messages 17 de contenu et 18 de service entre eux. Le système 10 est apte à désembrouiller les messages de contenu et de service reçus embrouillés, pour récupérer les messages 17 de contenu et 18 de service d'origine.

De préférence, la clef de déchiffrement de service Ksi est régulièrement mise à jour à travers un changement d'indice i. En outre, une période de mise à jour est prédéterminée, et est, par exemple, égale à un mois.

Une telle mise à jour est, par exemple, prévue en changeant l'indice i de la clef de déchiffrement de service Ks à utiliser parmi l'ensemble des clefs de déchiffrement de service Ks possibles.

La valeur de la clef de déchiffrement de service Ksi pour un même indice peut être une mise à jour selon une période plus importante, par exemple un an.

La valeur de la clef de déchiffrement de service Ksi pour un même indice peut ne pas être mise à jour, en ayant par exemple un objet 14 portable jetable contenant différentes clefs de déchiffrement de service Ksi valable pour une période d'un an.

De préférence, la clef de déchiffrement de contenu Kc est mise à jour. La clef de déchiffrement de contenu Kc est régulièrement mise à jour avec une période, par exemple, égale à dix secondes.

Une telle mise à jour est, par exemple, prévue en utilisant un message de service dédié véhiculant une nouvelle clef de déchiffrement de contenu Kc chiffrée transmise depuis le serveur 12.La nouvelle clef de déchiffrement de contenu Kc est fournie, de manière chiffrée, au système 10, par le serveur 12, au travers de la liaison 16 filaire, du réseau 11 de communication, et de la liaison 15 radiofréquence, par exemple, via un autre canal de transmission que celui utilisé pour le flux de données Ec audio et vidéo chiffrées proprement dit.

Selon une variante de réalisation, plusieurs clefs de déchiffrement de contenu Kc sont pré-stockées au sein du système 10 et valable pour une durée prédéterminée, par exemple d'une année. D'après une telle variante, aucune clef de déchiffrement de service Ks n'est utilisée. Ainsi, les messages de service associés ne véhiculent pas les données Xc relatives aux deux clefs de déchiffrement de service Ks et de contenu Kc et les données relatives à l'indice i de la clef de déchiffrement de service.

Il est important d'observer que la période de mise à jour relative à la clef de déchiffrement de service Ks est supérieure à celle relative à la clef de déchiffrement de contenu Kc.

Selon une alternative de réalisation, le serveur 12 transmet, au travers de la liaison 16 filaire, du réseau 11 de communication, et de la liaison 15 radiofréquence, au système 10, un flux de données Ec audio et vidéo chiffrées à l'aide d'une unique clef de chiffrement contenu Kc sans transmission de celle-ci ni d'aucune donnée relative à une autre clef de déchiffrement (en particulier, aucune donnée relative à une clef de déchiffrement de service Ks). Selon une telle alternative, le système 10 dispose de la seule clef de déchiffrement de contenu Kc stockée au sein d'une mémoire de type non volatile. Selon une telle alternative, aucune autre clef de déchiffrement n'est nécessaire pour déterminer la clef de déchiffrement de contenu Kc.

Selon une autre alternative de réalisation, le serveur 12 transmet, au travers de la liaison 16 filaire, du réseau 11 de communication, et de la liaison 15 radiofréquence, au système 10, un flux de données audio et vidéo chiffrées à l'aide d'une unique clef de chiffrement de contenu , et des données chiffrées relatives à une unique clef de déchiffrement. Les données relatives à l'unique clef de déchiffrement permettent d'en déduire la clef de déchiffrement de contenu Kc.

On montre, en figure 2, un mode de réalisation particulier du système 10 mis en oeuvre pour déchiffrer le contenu chiffré fourni depuis le serveur 12 géré par le fournisseur de contenu.

Le système 10 inclut le terminal 13 et l'objet portable 14.

Le terminal 13 peut être mobile ou fixe.

Le terminal 13 est constitué, par exemple, d'un téléphone mobile.

En tant que terminal 13, il peut également s'agir d'un assistant numérique personnel (ou PDA acronyme pour « Personal Digital Assistant » en langue anglaise), d'un ordinateur personnel (ou PC acronyme pour « Personal Computer » en langue anglaise), ou d'un téléviseur relié par voie radiofréquence et/ou par voie filaire au serveur 12.

Le terminal 13 est doté, entre autres, d'un microprocesseur 22, d'une antenne 24, d'une interface 25 de type sans contact, une ou plusieurs mémoires symbolisées par un seul bloc mémoire 26, de l'écran 19 d'affichage et du clavier 110.

Le microprocesseur 22 constitue le coeur central du terminal 13 qui traite les données et les contrôle, et pilote l'ensemble des éléments compris au sein du terminal 13. Le microprocesseur 22 met en oeuvre un système d'exploitation stocké dans le bloc mémoire 26, pour faire fonctionner le terminal 13.

L'antenne 24 est utilisée pour communiquer avec le réseau 11 de communication.

L'écran 19 est prévu pour afficher notamment des données propres à un menu pour sélectionner un serveur accessible depuis le terminal 13, et des données vidéo fournies en clair ou déchiffrées par le terminal 13.

Le terminal 13 comporte, en tant qu'interface 25 sans contact, une interface Bluetooth (marque déposée), permettant de communiquer par ondes radiofréquences avec l'extérieur, avec tout objet communicant situé à proximité, par exemple jusqu'à environ dix mètres.

Le bloc mémoire 26 inclut une mémoire de type non volatile, telle qu'une mémoire de type ROM (acronyme pour « Read Only Memory » en langue anglaise) et/ou une mémoire de type Flash. La mémoire de type non volatile stocke le système d'exploitation, un programme applicatif ou application de déchiffrement des données à l'aide de la clef de déchiffrement de contenu Kc, pour déchiffrer les données audio et vidéo chiffrées. De plus, de préférence, la mémoire de type non volatile stocke une application pour déchiffrer les données relatives à la clef de déchiffrement de contenu Kc à recevoir de l'objet portable 14 au travers de l'interface 25 Bluetooth. Enfin, la mémoire de type non volatile stocke une application pour chiffrer les données audio à transmettre, au travers de l'interface 25 Bluetooth, à l'objet portable.

Il convient de noter que la technologie Bluetooth prévoit de manière inhérente une sécurisation des données échangées entre deux entités appairées.

L'objet portable 14 et le terminal 13 échangent de manière sécurisée de par la technologie Bluetooth.

Il est clair que si la technologie de type sans contact utilisée n'intègre pas, de manière inhérente en soi, un canal sécurisé, alors il est prévu de sécuriser le canal d'échange entre l'objet portable 14 et le terminal 13, par exemple au moyen d'un schéma cryptographique connu en soi, commun à l'objet portable 14 et au terminal 13.

Le bloc mémoire 26 inclut également une mémoire de type volatile. La mémoire de type volatile est destinée à stocker temporairement notamment des données intermédiaires propres aux calculs de chiffrement ou déchiffrement, ainsi que des données relatives à la clef de déchiffrement de contenu Kc reçue de l'extérieur.

Le terminal 13 est adapté pour recevoir, via l'antenne 24, sous la forme de messages de contenu, des données Ec audio et vidéo chiffrées, et, sous la forme de messages de service des données chiffrées Xc, i relatives aux clefs de déchiffrement de contenu Kc, et de service Ksi, ainsi que l'indice i identifiant la bonne clef de déchiffrement de service à utiliser.

Le terminal 13 est adapté pour re-diriger, au travers de l'interface 25 Bluetooth, vers l'objet portable 14, via un premier lien 28 radiofréquence, les messages 18 de service véhiculant les données chiffrées Xc, i relatives aux clefs de déchiffrement de contenu Kc, et de service Ksi, et l'indice i identifiant la bonne clef de déchiffrement de service à utiliser.

Le terminal 13 est adapté pour recevoir, en retour, depuis l'objet portable 14, au travers de l'interface 25 Bluetooth, via un deuxième lien 210 radiofréquence, la clef de déchiffrement de contenu Kc.

La clef de déchiffrement de contenu Kc est reçue, de préférence de manière chiffrée. Le terminal 13 est alors apte à déchiffrer la clef de déchiffrement de contenu Kc.

Le terminal 13 est adapté pour déchiffrer les données Ec audio et vidéo chiffrées à l'aide de la clef de déchiffrement de contenu Kc reçue.

Selon une variante de réalisation, le terminal est adapté pour re-diriger les seules données audio chiffrées à un objet portable externe, dit deuxième objet portable, via l'interface 25 Bluetooth, accompagnées des données relatives à la clef de déchiffrement de contenu Kc reçue depuis le premier objet portable. Le premier objet portable est celui qui détermine la clef de déchiffrement de contenu Kc avant de la transmettre au terminal. Le deuxième objet portable distinct du premier objet portable est adapté pour déchiffrer les données audio chiffrées à l'aide de la clef de déchiffrement de contenu Kc reçue du terminal. Le terminal exerce une fonction de déchiffrement des seules données vidéo à l'aide de la clef de déchiffrement de contenu Kc reçue du premier objet portable. Le terminal est, pour le traitement des données audio chiffrées, un simple intermédiaire en jouant un rôle d'aiguilleur pour échanger avec les différents objets portables effectuant, chacun, une fonction qui lui est dédiée, à savoir une fonction de détermination de la clef de déchiffrement de contenu Kc et une fonction de déchiffrement des données audio respectivement.

Selon une autre variante de réalisation, le terminal est adapté pour transmettre les seules données vidéo chiffrées à un objet portable externe, dit deuxième objet portable, via l'interface 25 Bluetooth, accompagnées des données relatives à la clef de déchiffrement de contenu Kc reçues depuis le premier objet portable. Le premier objet portable est celui qui détermine la clef de déchiffrement de contenu Kc avant de la transmettre au terminal. Le deuxième objet portable distinct du premier objet portable est adapté pour déchiffrer les données vidéo chiffrées à l'aide de la clef de déchiffrement de contenu Kc reçue du terminal. Le terminal exerce une fonction de déchiffrement des seules données audio à l'aide de la clef de déchiffrement de contenu Kc reçue du premier objet portable. Le terminal est, pour le traitement des données vidéo chiffrées, un simple intermédiaire en jouant un rôle d'aiguilleur pour échanger avec les différents objets portables effectuant, chacun, une fonction qui lui est dédiée, à savoir une fonction de détermination de la clef de déchiffrement de contenu Kc et une fonction de déchiffrement des données vidéo respectivement.

Selon encore une autre variante de réalisation, le terminal est adapté pour transmettre, via l'interface 25 Bluetooth, d'une part, les données vidéo chiffrées, à un objet portable externe, dit deuxième objet portable, accompagnées des données relatives à la clef de déchiffrement de contenu reçue depuis le premier objet portable, et d'autre part, les données audio chiffrées, à un objet portable externe, dit troisième objet portable, accompagnées des données relatives à la clef de déchiffrement de contenu reçue depuis le premier objet portable. Le premier objet portable est celui qui déchiffre la clef de déchiffrement de contenu Kc avant de la transmettre au terminal. Le deuxième objet portable distinct du premier objet portable est adapté pour déchiffrer les données vidéo chiffrées à l'aide de la clef de déchiffrement de contenu Kc reçue du terminal. Le troisième objet portable distinct du premier objet portable est adapté pour déchiffrer les données audio chiffrées à l'aide de la clef de déchiffrement de contenu Kc reçue du terminal. Selon une autre variante, les deuxième et troisième objets portables forment un seul et même objet portable. Selon une autre variante, les premier, deuxième et troisième objets portables forment un seul et même objet portable. Le terminal n'exerce aucune fonction de déchiffrement de données audio et/ou vidéo chiffrées. Le terminal est ainsi un simple intermédiaire jouant un rôle d'aiguilleur pour échanger avec les différents objets portables effectuant, chacun, une fonction qui lui est dédiée, à savoir une fonction de détermination de la clef de déchiffrement de contenu Kc, une fonction de déchiffrement des données vidéo chiffrées, et une fonction de déchiffrement des données audio chiffrées respectivement.

Selon le mode de réalisation présenté, une fois les données Ec audio et vidéo obtenues en clair, c'est-à-dire non chiffrées, le terminal 13 est apte à afficher sur son propre écran 19 les données vidéo, et à transférer, via l'interface 25 Bluetooth, les données audio, de préférence, de manière chiffrée, à l'objet portable 14.

Selon une variante de réalisation (non représentée), le terminal 13 transmet, au travers de son interface Bluetooth, les données vidéo vers l'objet portable 14 équipé, en outre d'un écran, qui les reçoit au travers de sa propre interface Bluetooth, pour les afficher. L'écran utilisé pour l'affichage des données vidéo est, non pas celui du terminal 13, mais un écran déporté prévu sur l'accessoire Bluetooth doté d'un tel écran intégré et d'un ou plusieurs écouteurs, en tant qu'objet portable.

Selon une variante de réalisation (non représentée), le terminal 13 transmet, au travers de son interface Bluetooth, les données vidéo vers un autre objet portable équipé d'un écran, qui les reçoit au travers de sa propre interface Bluetooth, pour les afficher. L'écran utilisé pour l'affichage des données vidéo est, non pas celui du terminal 13, mais un écran déporté prévu sur un accessoire Bluetooth doté d'un tel écran intégré, en tant qu'autre objet portable.

L'objet portable 14 est destiné à interagir avec le terminal 13 pour déchiffrer le contenu chiffré. Le contenu chiffré comporte les données Ec audio et vidéo chiffrées et les données chiffrées Xc, i relatives, d'une part, aux deux clefs de déchiffrement de contenu Kc, et de service Ksi, et d'autre part, à un indice i identifiant la clef de déchiffrement de service pertinente à utiliser.

L'objet portable 14 reçoit, via une interface de type sans contact, les données chiffrées Xc, i relatives, d'une part, aux deux clefs de déchiffrement de contenu Kc, et de service Ksi, et d'autre part, à un indice i identifiant la clef de déchiffrement de service pertinente à utiliser.

Les données chiffrées Xc relatives aux deux clefs de déchiffrement de contenu Kc, et de service Ksi sont le résultat d'une fonction prédéfinie f, pouvant s'exprimer selon l'expression suivante : $Xc = f(Kc, Ksi)$.

L'objet portable 14 détermine la clef de déchiffrement de contenu Kc à l'aide des données chiffrées Xc, i reçues du terminal 13 et relatives aux clefs de déchiffrement de contenu Kc, et de service Ksi, et l'indice i identifiant la bonne clef de déchiffrement de service à utiliser, tel qu'explicité dans le détail plus bas en relation avec la figure 3.

Une fois que la clef de déchiffrement de contenu Kc a été déterminée, l'objet portable 14 la transmet, via l'interface de type sans contact, périodiquement, au terminal 13, afin de ne pas consommer de la bande passante. La clef de déchiffrement de contenu Kc reçue par le terminal 13 permet de déchiffrer une partie des données audio et vidéo.

L'objet portable 14 comprend, de préférence, au moins un écouteur pour diffuser au moins certaines données audio déchiffrées et/ou au moins un écran pour afficher au moins certaines données vidéo déchiffrées.

De préférence, l'objet portable 14 dispose de telles ressources, à savoir en particulier, une interface de type sans contact pour communiquer avec l'extérieur, un ou plusieurs écouteurs et/ou un ou plusieurs écrans.

De manière optionnelle, l'objet portable 14 est également adapté pour déchiffrer les données audio et/ou vidéo chiffrées à l'aide de la clef de déchiffrement de contenu Kc que l'objet portable 14 a lui-même déterminé.

L'objet portable 14 est un accessoire que l'utilisateur final peut librement porter sur lui. Il s'agit d'un accessoire Bluetooth.

En tant qu'accessoire Bluetooth, il peut se présenter sous différentes formes.

On peut notamment citer un casque Bluetooth à écouteur(s) ou une oreillette Bluetooth.

On peut également prévoir une montre Bluetooth ou un bijou Bluetooth.

L'objet portable 14 comporte, également, une interface Bluetooth, permettant de communiquer en sans contact à proximité par un lien radiofréquence avec l'extérieur.

Pour interagir avec le terminal 13, l'objet portable 14 est approché du terminal 13 pour se connecter au travers de leurs interfaces Bluetooth respectives, et appairer le terminal 13 et l'objet portable 14.

Pour appairer le terminal 13 et l'objet portable 14, l'utilisateur final entre, depuis une interface homme-machine prévue sur l'accessoire Bluetooth, en tant qu'objet portable 14, un mot de passe.

Le mot de passe est entré en utilisant un ou plusieurs boutons de commande prévus sur l'objet portable 14, tel que le bouton de sa mise en service et d'extinction, par exemple, selon une séquence d'appuis prédéfinie, à l'aide d'au moins un appui relativement long (par exemple de plus d'une seconde) et/ou d'au moins un appui relativement court (par exemple de moins d'une seconde).

Selon une variante de réalisation, le mot de passe est entré en utilisant un microphone incorporé à l'accessoire Bluetooth, pour que l'utilisateur final délivre un message vocal reconnu suite à une application de reconnaissance vocale embarquée au sein de l'accessoire Bluetooth.

Selon une caractéristique avantageuse de l'invention, le terminal 13 et l'objet portable 14 sont aptes à transmettre des données relatives, d'une part, depuis le terminal 13 vers l'objet portable 14, aux clefs de déchiffrement de contenu Kc et de service Ks, et d'autre part, depuis l'objet portable 14 vers le terminal 13, à la clef de déchiffrement de contenu Kc, au travers de leurs interfaces Bluetooth respectives.

Selon une variante de réalisation (non représentée), le terminal 13 et l'objet portable 14 sont aptes à transmettre des données relatives, d'une part, depuis le terminal 13 vers l'objet portable 14, aux clefs de déchiffrement de contenu Kc et de service Ks, et d'autre part, depuis l'objet portable 14 vers le terminal 13, à la clef de déchiffrement de contenu Kc, au travers d'interfaces de type Wibree, Wifi, Wireless USB, Zigbee, NFC, ou IR respectives.

Selon une autre variante de réalisation (non représentée), le terminal 13 et l'objet portable 14 sont aptes à transmettre des données relatives, d'une part, depuis le terminal 13 vers l'objet portable 14, aux clefs de déchiffrement de contenu Kc et de service Ks au travers d'interfaces de type Bluetooth, Wibree, Wifi, Wireless USB, Zigbee, NFC, ou IR respectives, et d'autre part, depuis l'objet portable 14 vers le terminal 13, à la clef de déchiffrement de contenu Kc, au travers d'interfaces sans contact d'un autre type Wibree, Wifi, Wireless USB, Zigbee, NFC, IR ou Bluetooth.

Selon une variante de réalisation (non représentée), le terminal 13 et l'objet 14 échangent les données audio, au travers d'une autre interface sans contact dont chacun dispose, telle qu'une interface Wibree, Wifi, Wireless USB, Zigbee, NFC, ou IR.

Selon une variante de réalisation (non représentée), les rôles du terminal et de l'objet portable explicités ci-dessus sont inversés. Plus précisément, l'objet portable est apte à recevoir, depuis l'extérieur du système 10, les données audio et/ou vidéo chiffrées et les données relatives aux clefs de déchiffrement de service Ks et de contenu Kc. L'objet portable est adapté pour rediriger les données relatives aux clefs de déchiffrement de service Ks et de contenu Kc vers le terminal, à déchiffrer les données audio et vidéo chiffrées à l'aide de la clef de déchiffrement de contenu Kc reçue du terminal, et à les transmettre déchiffrées, en tout ou partie, au terminal. Quant au terminal, ce dernier est apte à déterminer la clef de déchiffrement de contenu Kc, à partir des données relatives aux clefs de déchiffrement de service Ks et de contenu Kc reçues de l'objet portable, et à recevoir les données audio et vidéo déchiffrées reçues depuis l'objet portable. Pour ce faire, l'objet portable et le terminal échangent les données relatives aux deux clefs de déchiffrement de contenu Kc et de service Ks, au travers de leurs interfaces Bluetooth respectives, et les données de contenu audio et vidéo déchiffrées. Le terminal affiche les données vidéo via son propre écran et diffuse les données audio via un ou plusieurs haut-parleurs dont il est également doté.

Selon encore une autre variante de réalisation (non représentée), les rôles du terminal et de l'objet portable explicités ci-dessus sont inversés en cours de fonctionnement, de manière connue en soi, suite à un échange d'informations, déterminant celui du terminal 13 ou de l'objet portable 14 qui prend tel ou tel rôle au sein du système 10. Une telle variante suppose que le terminal et l'objet portable comprennent, chacun, des moyens pour recevoir les données audio et vidéo chiffrées depuis l'extérieur du système et des données relatives aux clefs de déchiffrement de contenu Kc et de service Ks, des moyens pour déterminer la clef de déchiffrement de contenu Kc, des moyens pour déchiffrer les données audio et vidéo chiffrées à l'aide de la clef de déchiffrement de contenu. En outre, le terminal et l'objet portable comprennent, chacun, éventuellement un ou des haut-parleurs pour diffuser les données audio, et un ou plusieurs écrans pour afficher les données vidéo. Selon une telle variante, les rôles du terminal et de l'objet portable sont interchangeables. D'après une telle variante, les tâches à accomplir par chacun sont soit définies et imposées par l'une des deux entités, à savoir le terminal ou l'objet portable, soit réparties en fonction des capacités de chaque entité. Et dans le cas où deux entités sont également capables, la priorité de l'accomplissement de tâches est donnée à l'objet portable. Ainsi, l'objet portable capable de recevoir des données chiffrées Ec accomplit une telle tâche en en délaissant le terminal. Dans le cas où seul l'objet portable est capable de recevoir des données chiffrées Ec, le terminal accomplit la seule tâche d'afficher les données vidéo fournies en clair par l'objet portable.

Comme illustré sur la figure 3, selon un mode de réalisation particulier, l'objet portable 14, constituant un casque Bluetooth, comporte des moyens 32 de traitement et de contrôle de données, une ou plusieurs mémoires symbolisées par un seul bloc mémoire 34, un processeur 36 de traitement du signal (ou DSP acronyme pour « Digital Signal Processor » en langue anglaise), une interface 38 de communication de type Bluetooth, et un haut parleur intégré 310.

Les différents éléments de l'objet portable 14 sont reliés entre eux par un bus 312 interne bidirectionnel.

Les moyens 32 de traitement et de contrôle de données sont constitués par un microprocesseur ou une unité de traitement logique. De tels moyens 32 constituent l'organe central de traitement et de décision de l'objet portable 14. Ces moyens 32 mettent en oeuvre un système d'exploitation gouvernant leur fonctionnement.

Le bloc mémoire 34 comporte une mémoire non volatile de type ROM (acronyme pour « Read Only Memory » en langue anglaise) ou Flash ou autre, et une mémoire volatile de type RAM (acronyme pour « Random Access Memory » en langue anglaise) ou autre.

On rappelle que, tel que connu en soi, la mémoire volatile perd des données qu'elle stocke une fois que son alimentation est coupée, notamment lorsque l'objet portable 14 est mis hors service.

La mémoire non volatile stocke notamment le système d'exploitation, des données relatives à une adresse IP (acronyme pour « Internet Protocol » en langue anglaise) prédéterminée du site du serveur 12 auquel le système doit se connecter, et un algorithme secret pour déterminer la clef de déchiffrement de contenu Kc à partir de la clef de déchiffrement de service Ksi et de l'indice i identifiant la clef de déchiffrement de service à utiliser. L'adresse IP est récupérée par le microprocesseur 32 avant de se connecter, au travers de l'interface Bluetooth 38, du terminal 13, au serveur 12, et ce de manière automatique, c'est-à-dire sans intervention de l'utilisateur final.

De préférence, la mémoire non volatile stocke, en outre, des algorithmes de chiffrement et déchiffrement et des secrets nécessaires à la sécurisation de données à transférer, via l'interface Bluetooth 38, au terminal 13, et à recevoir depuis le terminal 13.

La mémoire volatile stocke temporairement des données propres aux calculs effectués par le DSP, des données relatives à la clef de déchiffrement de service Ks à utiliser, et des données relatives à la clef de déchiffrement de contenu Kc à transmettre à l'extérieur.

La clef de déchiffrement de service Ks à utiliser est soit transmise de manière chiffrée à l'objet portable 14 soit stockée au sein de l'objet portable 14, pour attester d'un abonnement au service de télédiffusion.

De manière préférentielle, la mémoire non volatile stocke, de manière sécurisée, par exemple chiffrée, la clef de déchiffrement de service Ks à utiliser,

ou l'ensemble des clefs de déchiffrement de service Ksi avec leur identifiant i associé.

L'objet portable 14 reçoit, depuis l'extérieur, l'indice i identifiant la clef de déchiffrement de service Ks à sélectionner parmi l'ensemble des clefs de déchiffrement de service Ksi pour déterminer la clef de déchiffrement de contenu Kc.

Le DSP 36 est destiné à effectuer tout calcul de chiffrement ou déchiffrement, notamment celui de la clef de déchiffrement de contenu Kc à partir de la clef de déchiffrement de service Ks identifiée. Pour effectuer le calcul de la clef de déchiffrement de contenu Kc, le DSP 36 effectue l'opération suivante :

$$Kc = f^{-1}(Xc, Ks).$$

Selon une variante de réalisation, un DSP est prévu, en tant que moyens de traitement, de détermination de la clef de déchiffrement de contenu Kc et de contrôle de données, seul à la place du microprocesseur et d'un DSP prévus dans le mode de réalisation explicité ci-dessus.

Le haut parleur 310 est prévu pour diffuser, à l'extérieur, un son produit à partir des données audio déchiffrées.

Les données audio déchiffrées sont fournies depuis le terminal appairé extérieur.

Optionnellement, l'objet portable 14 comporte, en outre, un écran d'affichage (non représenté) pour afficher des données vidéo reçues depuis le terminal.

L'interface 38 Bluetooth est utilisée pour communiquer, par un lien radiofréquence, de courte ou moyenne portée, par exemple jusqu'à une dizaine de mètres, avec le terminal 13.

Optionnellement, l'objet portable 14 intègre, en outre, un serveur, par exemple de type http (acronyme pour « HyperText Transfer Protocol » en langue anglaise). Le terminal 13 se connecte au serveur intégré à l'objet portable 14, via la liaison sans fil Bluetooth, pour configurer le service de déchiffrement ou paramétrer au moins un autre service offert par l'objet portable 14 à l'extérieur. Le terminal 13 joue le rôle de simple relais ou passerelle entre le réseau de communication extérieur et l'objet portable 14 accessible, au travers de la liaison sans fil Bluetooth, en tant que client http, depuis un serveur distant compris au sein du réseau.

Optionnellement, l'objet portable 14 comporte, en outre, une batterie intégrée pour alimenter les différents éléments qu'il incorpore.

Optionnellement, l'objet portable 14 est, par ailleurs, adapté pour déchiffrer des données chiffrées fournies, au travers de son interface 38 Bluetooth, depuis le terminal extérieur, à l'aide d'une ou plusieurs clefs de déchiffrement.

L'objet portable 14 est peu cher et librement déplaçable, vis-à-vis du terminal 13 auquel il est à appairer, ou tout en restant connecté avec le terminal 13 auquel il est appairé, ou éventuellement un autre terminal auquel il est à appairer, sans effectuer une quelconque opération de manipulation sur le terminal 13 (ou les terminaux impliqués).

**Revendications**

1. Système (10) pour déchiffrer des données audio et/ou vidéo chiffrées, le système comprenant un terminal (13) et au moins un objet (14) portable, le terminal et/ou l'objet portable comprenant des moyens (24) pour recevoir des données audio et/ou vidéo chiffrées depuis l'extérieur du système, des moyens (36) pour déterminer au moins une clef de déchiffrement, et des moyens pour déchiffrer les données audio et/ou vidéo chiffrées, ladite au moins une clef de déchiffrement (Kc) étant nécessaire pour déchiffrer les données audio et/ou vidéo chiffrées,

**caractérisé en ce que** le terminal et au moins un objet portable comprennent, chacun, au moins une interface (25; 38) de communication de type sans contact, pour échanger :

- des données relatives à au moins une clef de déchiffrement (Xc,Kc);
- des données audio et/ou vidéo chiffrées ; et/ou
- des données audio et/ou vidéo déchiffrées (audio).

**2.** Système selon la revendication 1, dans lequel ladite au moins une interface de communication de type sans contact est de type radiofréquence et/ou de type infra rouge.

**3.** Système selon la revendication 1 ou 2, dans lequel l'objet portable comprend au moins un écouteur (14) pour diffuser au moins certaines données audio déchiffrées et/ou au moins un écran pour afficher au moins certaines données vidéo déchiffrées.

**4.** Système selon l'une des revendications 1 à 3, dans lequel ladite au moins une interface de communication de type sans contact est une interface de communication de type radiofréquence appartenant au groupe de technologies comprenant :

- Bluetooth;
- Wibree ;
- Wifi ;
- Wireless Universal Serial Bus;
- Zigbee;
- Near Field Communication.

**5.** Système selon l'une des revendications 1 à 4, dans lequel le terminal comprend des moyens (22) pour déchiffrer les données audio et/ou vidéo chiffrées, et dans lequel l'objet portable comprend des moyens (36) pour déterminer une clef de déchiffrement de contenu, au moins une clef de déchiffrement de service identifiable étant nécessaire pour déterminer la clef de déchiffrement de contenu, les clefs de déchiffrement de service et de contenu étant nécessaires pour déchiffrer les données audio et/ou vidéo chiffrées.

**6.** Système selon la revendication 5, dans lequel l'objet portable comprend des moyens (34) pour mémoriser des données relatives à ladite au moins une clef de déchiffrement de service identifiable.

**7.** Système selon la revendication 5 ou 6, dans lequel le terminal comprend:

- des moyens (25) pour recevoir, depuis l'extérieur du système, des données relatives à ladite au moins une clef de déchiffrement de service et la clef de déchiffrement de contenu,
- des moyens (22) pour identifier des données relatives à ladite au moins une clef de déchiffrement de service comme nécessaire pour déterminer la clef de déchiffrement de contenu,
- des moyens (22, 25) pour router, au travers de l'interface de communication de type sans contact, à l'objet portable, les données relatives à ladite au moins une clef de déchiffrement de service et la clef de déchiffrement de contenu,
et dans lequel l'objet portable comprend des moyens pour recevoir, depuis le terminal, au travers de l'interface de communication de type sans contact, les données relatives à ladite au moins clef de déchiffrement de service de service et la clef de déchiffrement de contenu.

**8.** Système selon l'une des revendications 5 à 7, dans lequel l'objet portable comprend des moyens pour transmettre au terminal, au travers de l'interface de communication de type sans contact, des données relatives à la clef de déchiffrement de contenu, et dans lequel le terminal comprend des moyens pour recevoir, depuis l'objet portable, au travers de l'interface de communication de type sans contact, les données relatives à la clef de déchiffrement de contenu.

**9.** Système selon la revendication 8, dans lequel le terminal comprend des moyens pour transmettre à l'objet portable, au travers de l'interface de communication de type sans contact, les données audio et/ou vidéo déchiffrées, et dans lequel l'objet portable comprend des moyens pour recevoir, depuis le terminal, au travers de l'interface de communication de type sans contact, les données audio et/ou vidéo déchiffrées.

**10.** Objet (14) portable pour déchiffrer des données audio et/ou vidéo chiffrées, l'objet portable comprenant des moyens (36) pour déterminer au moins une clef de déchiffrement, ladite au moins une clef de déchiffrement étant nécessaire pour déchiffrer les données audio et/ou vidéo chiffrées, **caractérisé en ce que** l'objet portable comprend au moins une interface (38) de communication de type sans contact, pour échanger, avec l'extérieur de l'objet portable :

- des données relatives à au moins une clef de déchiffrement (Xc,Kc);
- des données audio et/ou vidéo chiffrées ; et/ou
- des données audio et/ou vidéo déchiffrées (audio).

**11.** Objet portable selon la revendication 10, dans lequel l'objet portable comprend au moins un écouteur (310) pour diffuser au moins certaines données audio déchiffrées et/ou au moins un écran pour afficher au moins certaines données vidéo déchiffrées.

**12.** Objet portable selon l'une des revendications 10 et 11, dans lequel l'objet portable comprend des moyens (36) pour chiffrer ladite au moins une clef de déchiffrement.

**13.** Objet portable selon l'une des revendications 10 à 12, dans lequel l'objet portable comprend des moyens (34) pour mémoriser ladite au moins une clef de déchiffrement.

**14.** Objet portable selon l'une des revendications 10 à 13, dans lequel l'objet portable comprend des moyens (36) pour déchiffrer les données audio et/ou vidéo chiffrées à l'aide de ladite au moins une clef de déchiffrement.

**15.** Objet portable selon l'une des revendications 10 à 14, dans lequel l'objet portable constitue au moins une oreillette (14).

**16.** Objet portable selon l'une des revendications 10 à 14, dans lequel l'objet portable constitue au moins une paire de lunettes.

**17.** Terminal (13) pour déchiffrer des données audio et/ou vidéo chiffrées, le terminal comprenant des moyens (24) pour recevoir, depuis l'extérieur du terminal, des données audio et/ou vidéo chiffrées (Ec), au moins une clef de déchiffrement (Kc) étant nécessaire pour déchiffrer les données audio et/ou vidéo chiffrées,
**caractérisé en ce que** le terminal comprend au moins une interface de communication de type sans contact, pour échanger, avec l'extérieur du terminal :

- des données relatives à au moins une clef de déchiffrement (Xc, Kc);
- des données audio et/ou vidéo chiffrées ; et/ou
- des données audio et/ou vidéo déchiffrées.

**18.** Terminal selon la revendication 17, dans lequel le terminal comprend des moyens pour recevoir, depuis l'extérieur du terminal, des données relatives à au moins une clef de déchiffrement, des moyens pour identifier les données relatives à au moins une clef de déchiffrement reçues, et des moyens pour transmettre, vers l'extérieur du terminal, au travers de l'interface de communication de type sans contact, les données relatives à au moins une clef de déchiffrement nécessaire pour déchiffrer les données audio et/ou vidéo chiffrées.

**19.** Terminal selon la revendication 17 ou 18, dans lequel le terminal comprend des moyens pour déchiffrer les données audio et/ou vidéo chiffrées

**20.** Terminal selon l'une des revendications 17 à 19, dans lequel le terminal est au moins l'un des appareils appartenant au groupe comprenant :

- un téléphone mobile,
- un ordinateur personnel,
- un décodeur,
- un agenda numérique personnel.

**Fig. 1**

**Fig. 2**

$X_C = f(K_C, K_S)$

**Fig. 3**

Office européen
des brevets

**RAPPORT DE RECHERCHE EUROPEENNE**

Numéro de la demande

EP 07 30 1724

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2004/084555 A (KONINKL PHILIPS ELECTRONICS NV [NL]; HOULDSWORTH RICHARD J [GB]; BENJE) 30 septembre 2004 (2004-09-30) * le document en entier * ----- | 1-20 | INV. H04N7/167 |
| A | "FUNCTIONAL MODEL OF A CONDITIONAL ACCESS SYSTEM" 21 décembre 1995 (1995-12-21), EBU REVIEW- TECHNICAL, EUROPEAN BROADCASTING UNION. BRUSSELS, BE, PAGE(S) 64 - 77 , XP000559450 ISSN: 0251-0936 * le document en entier * ----- | 1-20 | |
| A | US 2004/252562 A1 (KIM KUN-TAE [KR]) 16 décembre 2004 (2004-12-16) * le document en entier * ----- | 1-20 | |

DOMAINES TECHNIQUES RECHERCHES (IPC)

H04N

Le présent rapport a été établi pour toutes les revendications

| Lieu de la recherche | Date d'achèvement de la recherche | Examinateur |
|---|---|---|
| Munich | 2 octobre 2008 | Schneiderlin, Jean |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 07 30 1724

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-10-2008

| Document brevet cité au rapport de recherche | | Date de publication | Membre(s) de la famille de brevet(s) | | Date de publication |
|---|---|---|---|---|---|
| WO 2004084555 | A | 30-09-2004 | CN | 1762158 A | 19-04-2006 |
| | | | EP | 1606947 A1 | 21-12-2005 |
| | | | JP | 2006526319 T | 16-11-2006 |
| | | | KR | 20050108399 A | 16-11-2005 |
| | | | US | 2006189319 A1 | 24-08-2006 |
| US 2004252562 | A1 | 16-12-2004 | KR | 20040107045 A | 20-12-2004 |

EPO FORM P0460

Pour tout renseignement concernant cette annexe : voir Journal Officiel de l'Office européen des brevets, No.12/82